# EUROPEAN PATENT SPECIFICATION

(11) **EP 1 427 148 B1**
(45) Date of publication and mention of the grant of the patent: **28.06.2006**
(21) Application number: 03026860.1
(22) Date of filing: 24.11.2003
(51) Int. Cl.: H04L 12/28, H04L 12/24, H04L 29/12, H04L 29/06

(54) **Method for communication between nodes in peer-to-peer networks using common group label**
Verfahren zur Kommunikation von Knoten in Peer-to-Peer Netzwerken mit Hilfe eines gemeinsamen Gruppenetiketts
Procédé de communication entre des noeuds dans un réseau peer-to-peer utilisant des étiquettes communes

(30) Priority: 04.12.2002 EP 02027121
(43) Date of publication of application: 09.06.2004
(73) Proprietor: Thomson Licensing, 92100 Boulogne-Billancourt (FR)
(72) Inventor: Blawat, Meinolf, 30659 Hannover (DE); Hepper, Dietmar, 30419 Hannover (DE); Kubsch, Stefan, 31559 Hohnhorst (DE); Klausberger, Wolfgang, 30559 Hannover (DE); Adolph, Dirk, 30952 Ronnenberg (DE)
(74) Representative: Rittner, Karsten

(56) References cited:
- WO-A-02/057917
- US-A- 6 064 297
- US-A1- 2002 156 893

## Description

### Field of the invention

This invention relates to a method for communication between technical devices being network nodes, e.g. digital electronic consumer devices but also computers.

### Background

In computer technology it is well known to build up a network of connected devices for exchanging data and sharing hardware resources. The separate devices are commonly called nodes. At the time being, nodes are usually computers, but can be other technical devices, and their interconnections are mainly electrically, optically or wireless radio connections. Networks can be classified as being based on either client-server or peer-to-peer (P2P) architectures. In P2P based networks a node is also referred to as a peer. While in client-server architectures each node is defined to be either client or server, there is no such differentiation in P2P networks. Instead, peers include both, server and client functionalities. P2P technology enables each node to be capable of providing services or resources to any other node in the network, or use services or resources provided by any other node in the network.

P2P networks are usually not restricted to any special applications or underlying network topologies, but can be understood as a set of nodes, or peers, which rely on certain sets of specific protocols. It is characteristic for a P2P network that the peers communicate directly with other peers, so that no central network organization is required. Most P2P networks support that peers can be connected to the network or disconnected from the network at any time.

The mentioned P2P protocols are required for basic network organization, such as e.g. discovery of other connected peers, offering own services or resources to other peers (advertising), understanding other peers' advertising messages, or allocating connection capacity for establishing certain connections to other peers. Also, there are protocols that enable a group of peers to cooperate, and thus form a peer-group. Such peer-groups are usually used for providing a common set of services within the peer group. Nevertheless, the purpose of a peer-group is not generally defined. A peer belonging to a peer-group normally has access to, and can be accessed from, all other connected peers of the same group. Additionally, each peer may be a member of further peer-groups. For adding or removing peers to or from a peer group, the user is always required to perform certain administrative activities.

Generally only authorized users have access to the peers, or to the peers' contents, or to released parts of the peers' contents, where authorization of the user is achieved by a user-specific key, either physical or virtual secret key, e.g. password.

Since peers must be regarded as individuals, it is necessary that each peer can be unambiguously addressed by using an identifier. Usually a peer is addressed by using a unique label, e.g. a so called Universal Unique Identifier (UUID).

When peers form a peer-group, the peer-group as such usually gets a dedicated label, e.g. UUID, which can be used for identifying the members of the group.
The described peer-to-peer networks and mechanisms are in a detailed manner published e.g. in WO 02/057917 A2.

US-A-6 064 297 shows a home control system that uses power lines for communication within a building, wherein groups of transmitting and receiving devices are defined by group identifiers. Each group uses a simple, individual protocol. The possible scope of a group is defined by the building.

### Invention

A problem to be solved by the invention is to reduce the required amount of technical administration when establishing communication between peer-to-peer networks, with each of said networks being under control of its respective owner, like e.g. home networks. This problem is solved by the method disclosed in claim 1. An apparatus that utilizes this method is disclosed in claim 11.

According to the invention peers belonging to different P2P groups can communicate with each other, and access each others content or services, if said P2P groups are known to each other. Administrational effort for the user is also reduced by not requiring user authentication for accessing any connected peer, or content associated with such peer. As a consequence of using the invention, a user can have his devices connected to a network without having any special networking knowledge.

Advantageous additional embodiments of the invention are disclosed in the dependent claims, the following description and the figures.

### Brief description of the drawings

Exemplary embodiments of the invention are described with reference to the accompanying drawings, which show in
Figure 1 an exemplary peer-to-peer network forming an Owner Zone, including an owner's home and other property;
Figure 2 how two Owner Zones are merged into one new Owner Zone;
Figure 3 an exemplary peer-to-peer network forming an Owner Zone, which comprises contents with restricted access;
Figure 4 an Owner Zone and exemplarily two related Trusted Zones, where the relationship of trust is bi-directional;
Figure 5 an Owner Zone and exemplarily a related Trusted Zone, where the relationship of trust is unidirectional;
Figure 6 two Owner Zones, being Trusted Zones to a third Owner Zone, and thus becoming Trusted Zones to each other.

### Detailed description of the invention

A person's home is a private place, not open to the public. The home is locked to prevent unwelcome persons from entering, but naturally welcome persons, such as family members, may always enter, and other welcome persons, such as guests, may enter at certain times. This corresponds to a relation of trust between the owner, or owner group, and the mentioned other persons. As a consequence, said trusted other persons usually have access to some, or most, or all, equipment within the owners home, including technical devices and media, e.g. radio, books, CDs. Nevertheless, there are always some things which may only be accessed by their respective owner, or by certain groups of persons such as family. Further, it is common to lend certain property, such as a book or a music CD, to trusted persons.

The invention maps the described personal relationship to a technical system, namely a multimedia home network, including electronic storage devices, such as e.g. CDs or DVDs, and to the connection between multimedia home networks belonging to different households. The invention employs the concept of P2P networking, and therefore refers to the respective technical devices as peers.

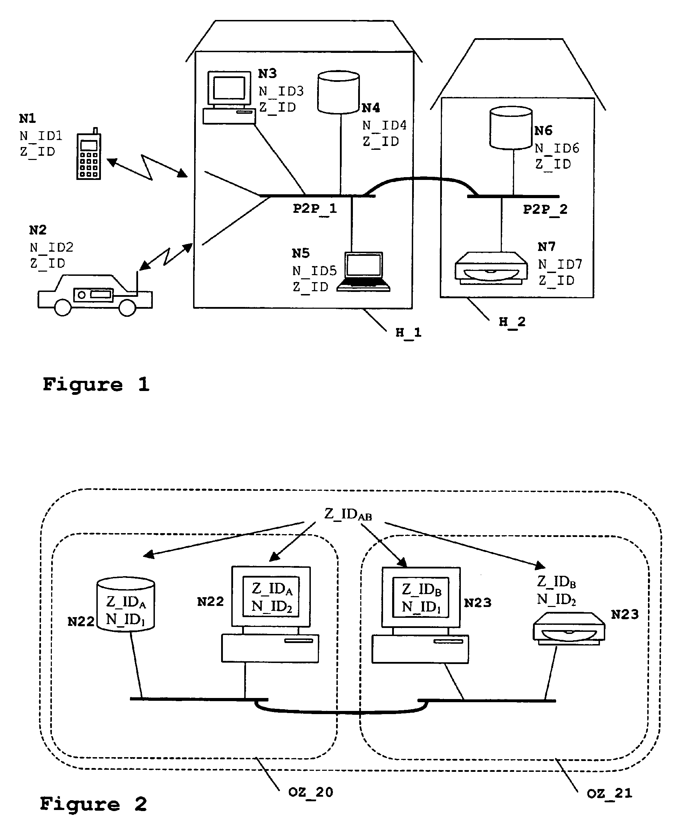

Connecting the technical devices of a household to a P2P network provides more user convenience, e.g. allows the owner to control devices remotely, or to share contents or services between different devices. For privacy reasons the P2P network comprises only peers belonging to the same household, or owner. Since the peers may be located outside the household, e.g. in the owners car, garden, or may be portable, the terminus "Owner Zone" is used to describe the group of devices, or peers, which is under control of the same owner, or group of owners, e.g. family. Figure 1 shows an exemplary Owner Zone, which includes the peers being under control of the same owner. The peers N1,...,N7 within the owners home H_1 are connected to a local P2P network P2P_1, the owners mobile peers N1,N2 are connected to the same P2P network, and other peers N6,N7 within another building H_2 belonging to the same owner are connected to another local P2P network P2P_2, and said two networks P2P_1,P2P_2 are connected to each other.

According to the invention the peers with physical access to the owner's home network are members of the Owner Zone, using known P2P mechanisms such as peer discovery, peer resolving, advertising and others. There is no connection allowed to any other peer outside the Owner Zone, unless any of the mechanisms described below is used.

Further the invention comprises that connections between peers can have one of a specified number of states, e.g. internal or external. The state of a connection can be assigned to said connection by using any means, e.g. plug coding or software control.

According to the invention, the Owner Zone is identified with a unique label, e.g. a Universal Unique Identifier (UUID). Additionally, the peers may be identified with unique labels, e.g. UUID, so that the peers belonging to an Owner Zone are uniquely identified with a tuple of labels, namely their respective unique node label and the Owner Zone's unique label. These labels are referred to in the following as Node_UUID and Zone_UUID, respectively. Only one group related label, or Zone_UUID, is assigned to a peer. A peer within an Owner Zone can identify all other peers within the same Owner Zone by comparing their Zone_UUID to its own Zone_UUID and finding that the Zone_UUIDs are identical. In Figure 1 each node N1,...,N7 has a corresponding node label N_ID1,...,N_ID7 and a group label Z_ID.

Different Owner Zones may communicate with each other, or access each others content or services, when following the rules defined below.

An Owner Zone may contain an informative section, e.g. data set, providing information regarding the structure and/or contents of the Owner Zone. This informative section is referred to in the following as Zone_Info_Data. Analogously, a peer within an Owner Zone may contain an informative section, e.g. data set, providing information regarding the structure and/or contents of the peer, which informative section is referred to in the following as Node_Info_Data. Within the Owner Zone, the mentioned informative sections are marked with unique labels, e.g. Zone_Info_UUID and Node_Info_UUID, respectively. The mentioned Zone_Info_Data may be updated automatically and may contain information like e.g. Zone_UUID, optional Zone_Name, optional Zone_Service_List or other information mentioned below.

Said optional Zone_Name may be a readable name under which the Owner Zone is addressed by other Owner Zones, thus partly being an alias for the Zone_UUID, but unlike a Zone_UUID not necessarily being unique. In case of a first Owner Zone addressing a second Owner Zone, and said second Owner Zone having a non-unique Zone_Name, it will be necessary for said first Owner Zone to specify said second Owner Zone uniquely, e.g. by internally mapping said second Owner Zones Zone_Name to said second Owner Zones Zone_UUID.

Said optional Zone_Service_List may define which services the Owner Zone offers to other Owner Zones, if said other Owner Zones are permitted to access. The Zone_Service_List may also define in a detailed manner which service shall be accessible for which of said other Owner Zones, including the optional definition of an access timeframe.

The mentioned group label, e.g. Zone_UUID, can be created when an owner decides to create an Owner Zone, and it can be discarded when the owner decides to discard the respective Owner Zone. Especially, when a first peer is connected to a second peer, thus building a new Owner Zone, and the peers detect that there is no Zone_UUID defined yet for the new zone, then both peers negotiate a new Zone_UUID without user interaction. Otherwise, when a first peer is connected to a second peer, and said first peer has no Zone_UUID defined yet, but said second peer already belongs to an Owner Zone and therefore has a Zone_UUID defined, then the Zone_UUID of the resulting P2P network may remain unchanged, so that said Zone_UUID can be transmitted from said second peer to said first peer. In another embodiment of the invention a new Zone_UUID may be negotiated for said resulting P2P network.

If an Owner Zone being accessible from another Owner Zone gets a new Zone_UUID, it may be advantageous to store the old Zone_UUID, or old Zone_UUIDs, so that said other Owner Zone can be informed about the change, or messages from said other Owner Zone using said old Zone_UUID are not rejected. The old Zone_UUID can e.g. be stored in the Zone_Info_Data section of the resulting Owner Zone.

Advantageously, the described labelling concept for an Owner Zone can be used to easily merge two or more Owner Zones, as shown in Figure 2. When two Owner Zones shall be merged, the first Owner Zone OZ_20 being labelled with a Zone_UUID Z_ID_{A}, and the second Owner Zone OZ_21 being labelled with a Zone_UUID Z_ID_{B}, then an exemplary method is to negotiate a new zone label, e.g. Zone_UUID_{AB}, which may be different from Zone_UUID_{A} and Zone_UUID_{B}, and then assign said new zone label to all peers N22,N23 belonging to said first Owner Zone OZ_20 or said second Owner Zone OZ_21.

When two Owner Zones, here being referred to as Sources, are merged into a new Owner Zone, then new Zone_Info_Data can be generated in order to describe the structure and/or contents of the new Owner Zone. Especially, the new Zone_Info_Data may contain information about both said Source Owner Zones, e.g. their respective Zone_UUIDs, Zone_Names and others, and thus making it possible to track on Owner Zone modifications.

Since the described method of merging two Owner Zones can be applied to any two Owner Zones, at least one of the previously described steps is performed, or approved, by the respective owners of said first and second Owner Zones.
Further, the described method of merging can be recursively applied when more than two Owner Zones shall be merged. In the case of merging more than two Owner Zones, the resulting Zone_Info_Data may contain information about several, or all, merged Source Owner Zones.
Advantageously, the described mechanism for merging enables the user to merge all his Owner Zones, which may be in various locations, into one Owner Zone. Therefore an Owner Zone is not limited to the user's home, as shown in Figure 1.

Likewise, the described labelling concept for an Owner Zone can be used to easily split one Owner Zone into two or more Owner Zones. When an Owner Zone, being labelled as e.g. Zone_UUID_{A}, shall be split, then an exemplary method is to calculate a new label, e.g. Zone_UUID_{B}, and then assign said new label to all peers being intended to belong to the new Owner Zone, thus discarding the old zone label for said peers. Likewise, the remaining peers, being labelled as Zone_UUID_{A}, can be assigned a new zone label, e.g. Zone_UUID_{C}, if the old label Zone_UUID_{A} may not be used any more.

When an Owner Zone, here being referred to as Source, is split into two Owner Zones, here being referred to as Targets, the owner of the Source Owner Zone will have to specify for the associated peers, contents and services one of said Target Owner Zones. New Zone_Info_Data can be generated for both said Target Owner Zones, describing their respective structure and/or contents, and especially including information about said Source Owner Zone, e.g. its Zone_UUID.

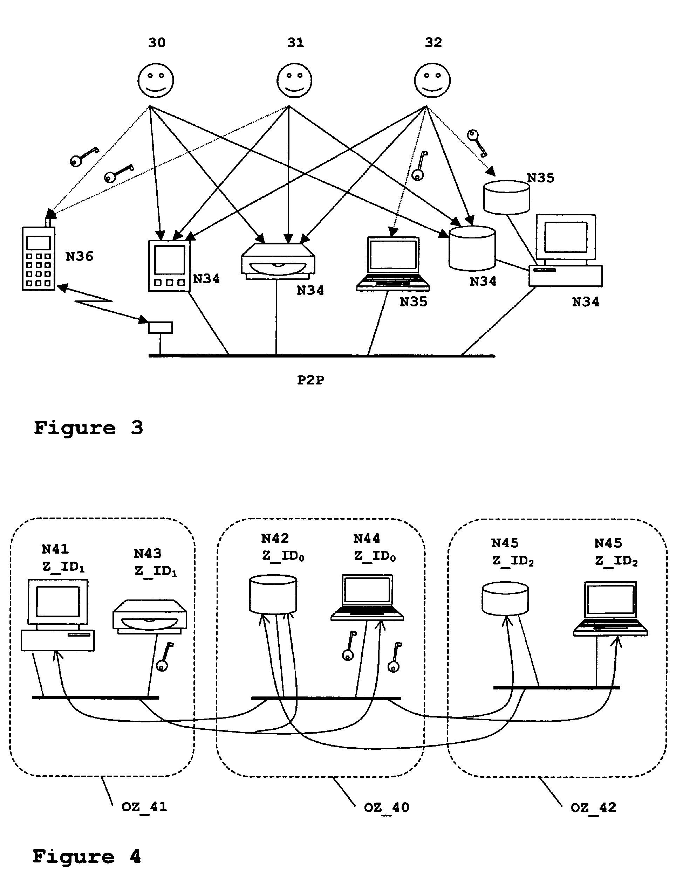

Furthermore, within an Owner Zone there is no need for explicit user identification, since every user with access to any connected peer is implicitly authorized to access the whole P2P network. The individual user is anonymous. In other words, authentication is related to the peer, not to the user. From the owner's point of view, this reflects a relation of trust existing among all persons within the owner's home, e.g. family. This does not exclude the possibility of assigning a lock mechanism, e.g. password, to certain content or a certain service, and thus limiting the number of users having access to said content or service. In such a case knowledge of a user-independent key, e.g. password, is required to access said protected content or service, so that user authentication is not needed. Figure 3 shows a group of users 30,31,32 having access to a number of peers, which are connected via a P2P network P2P. For some peers N34 all said users have free access, while for other peers N35,N36 access is limited to those users who have, or know, the respective key. A single user 32 has sole access to content or service N35, while other content or service N36 can be accessed by more than one user 30,31.

With the described method for content locking, it is likely that a super-user function is required, since it may happen that a key gets lost. A super-user function can use arbitrary methods, e.g. include the right to delete contents, and thus can solve the situation of contents being locked and the key being lost.

As mentioned above, communication between different Owner Zones is allowed when the following method is used. A first owner of a first Owner Zone can express a relation of trust towards a second owners Owner Zone, and thus give peers of said second Owner Zone access to certain content of said first Owner Zone. When a relation of trust is expressed from a first Owner Zone towards another, second Owner Zone, then said second Owner Zone is referred to as a "Trusted Zone" relative to said first Owner Zone. This relation of trust can be expressed towards any number of other Owner Zones. This may be implemented such that an Owner Zone contains a list of other Owner Zones which are regarded as Trusted Zones, where said other Owner Zones are represented e.g. by their respective unique labels. Said list of Trusted Zones may be part of the previously mentioned Zone_Info_Data. For each of said Trusted Zones it can be defined which peers within the Owner Zone may be accessed, or which contents or services within the Owner Zone may be accessed.

Figure 4 shows an exemplary Owner Zone OZ_40, consisting of peers 42,44 being labelled Z_ID₀, and two related Trusted Zones OZ_41,OZ_42, with the belonging peers N41,N43 and N45 being labelled Z_ID₁ and Z_ID₂, respectively. Peers within said Owner Zone OZ_40 may connect to peers within said Trusted Zones OZ_41,OZ_42 and access content or services from nodes N41,N45. Vice versa, peers from said Trusted Zones OZ_41,OZ_42 can connect to peers N42,N44 within said Owner Zone OZ_40 and access content or services. Certain content or service on a peer N43 within one Trusted Zone OZ_41 is locked as described before, and the key is not known in said Owner Zone OZ_40, so that the peers from the Owner Zone OZ_40 may not access said content or service. Further, certain content or service on a node N44 within the Owner Zone OZ_40 is locked as described before, and the key is known in a Trusted Zone OZ_41, so that peers from said Trusted Zone may access said content or service.

The described communication method between different Owner Zones may include that a number of predefined levels of trust exists within an Owner Zone, or globally, and the Owner Zone may have assigned for its Trusted Zones certain levels of trust. If said number of predefined levels of trust contains a hierarchy, then said Owner Zone may require for each of its contents or services a minimum level of trust.

Furthermore, it is possible that access between an Owner Zone and a related Trusted Zone is limited to a certain time frame if agreed upon between the owner of the Owner Zone and the owner of the Trusted Zone.

For establishing communication between an Owner Zone and a related Trusted Zone, it should not be necessary for the requesting zone to know more than the Zone_UUID of the requested zone, especially it is not necessary to know any Node_UUID, or content or service details about the requested zone. An exemplary method of establishing contact between Owner Zones is described in the following.

When a first peer belonging to a first Owner Zone receives a request for communication from a second peer belonging to a second Owner Zone, then the request contains the Zone_UUID of said second, requesting Owner Zone, and it may contain a specification of what is requested. The first, requested peer compares in a first step said Zone_UUID to its list of Trusted Zones, and thus detects if the requesting second peer belongs to any of these Trusted Zones. If this is the case, then the first, requested peer analyses in a second step the received request for details of what is requested, and if the requested content or service is available. If said details are not contained in the first request, said first peer may contact the second, requesting peer for these details. In a third step the first, requested peer may analyse if the second, requesting peer is permitted to access the requested contents or service, before in a fourth step either admitting or rejecting the requested access. Said admitting or rejecting the requested access is independent from the previously described lock mechanism, e.g. password, as long as the requesting, second peer can unlock said mechanism, as depicted in Figure 4 and described above.

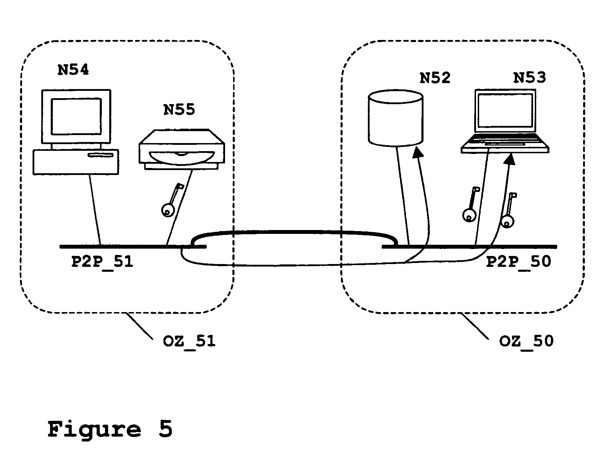

The mentioned relation of trust between Owner Zones can be further specified as follows.
The mentioned relation of trust can be a unidirectional or bi-directional relation, meaning that if a first Owner Zone is a Trusted Zone relative to a second Owner Zone, then said second Owner Zone can, but needs not necessarily, be a Trusted Zone relative to said first Owner Zone. The exemplary relation between Trusted Zones shown in Figure 4 is a bi-directional relation. It may be implemented such that either of two Owner Zones OZ_40,OZ_41 can detect if it is defined as Trusted Zone relative to the other Owner Zone, and suspend the relation of trust if this is not the case.
A unidirectional relation of trust is depicted in Figure 5. A first Owner Zone OZ_50 is a Trusted Zone relative to a second Owner Zone OZ_51, but said second Owner Zone OZ_51 is not a Trusted Zones relative to said first Owner Zone OZ_50. Consequently, the peers N54,N55 belonging to the second Owner Zone OZ_51 can access released content or services from the first Owner Zone OZ_50, but peers N52,N53 belonging to said first Owner Zone OZ_50 may not access content or services from the second Owner Zone OZ_51.

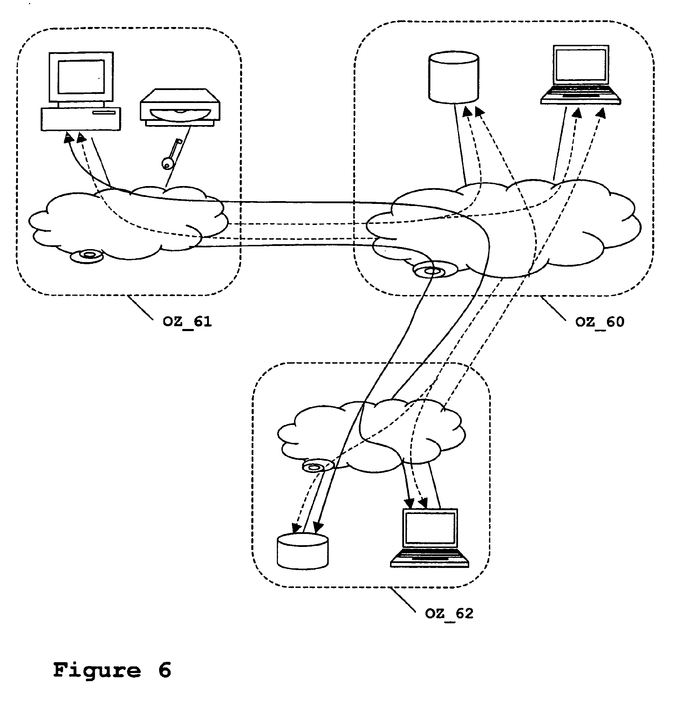

The mentioned relation of trust can be valid explicitly for two specified Owner Zones, as in Figures 4 and 5, or may also include all other Owner Zones, which have a "Trusted Zone" relation to either, or both, of them. Figure 6 shows a first Owner Zone OZ_60 being a Trusted Zone to a second Owner Zone OZ_61 and to a third Owner Zone OZ_62, where a relation of trust exists implicitly between the second Owner Zone OZ_61 and the third Owner Zone OZ_62, although they were not explicitly defined to be Trusted Zones to each other. In this case peers from Owner Zones OZ_61 and OZ_62 can access each other.

## Claims

1. A method for communication between technical devices being nodes (N41,N43) in networks, wherein:
- several groups of said nodes are defined, and
- for each of said groups, a common group label (Z_ID1) is assigned to nodes being a member of a said group of nodes (OZ_41), and the nodes (N41,N43) of said group can share services and resources with all other members of the same group of nodes,
said method including the steps of:
- defining for a first of said groups of nodes one or more classes of group labels, said classes representing trust levels with respect to said first group (OZ_41);
- classifying one or more group labels into a first of said classes (Trustedzone), and,
when a first node of said first group detects an attempt by a second node (N42,N44) to access services or resources of said first node, performing the following steps in said first node:
- detecting the group label (Z_ID0) of the second node (N42, N44);
- when the group label (Z_ID0) of the second node (N42,N44) is equal to the group label (Z_ID1) of the first node, permitting said access; and,
- when the group label (Z_ID0) of the second node (N42,N44) is different from the group label (Z_ID1) of the first node:
- determining if the group label (Z_ID0) of the second node (N42,N44) is classified into said first class (Trustedzone) ;
- when the group label (Z_ID0) of the second node (N42,N44) is classified into said first class (Trustedzone), permitting said access, and
- when the group label (Z_ID0) of the second node (N42,N44) is not classified into *said* first class (Trustedzone), rejecting said access.

2. Method according to claim 1, wherein the first class (TrustedZone) of group labels has one or more subclasses, and wherein different types of access are defined depending on the subclass, and wherein also the subclass of the group label (Z_ID₀) of the second node (N42,N44) is determined.

3. Method according to claim 1 or 2, wherein a connection between two nodes has a status, the status defining whether both connected nodes belong to the same group of nodes or not.

4. Method according to any of claims 1-3, wherein the nodes of said group of nodes (OZ_41) are assigned to or under control of the same user, or group of users.

5. Method according to any of claims 1-4, wherein each node is a member of not more than one group of nodes.

6. Method according to any of claims 1-5, wherein said steps of permitting access are restricted by a user-independent lock mechanism.

7. Method according to any of claims 1-6, wherein said step of classifying comprises the step of including classification information in a data set, the data set being readable for the nodes being a member of or permitted access to services or resources of a first node of said group of nodes.

8. Method according to any of claims 1-7, wherein said steps of permitting access are such that said access is limited to a defined time frame.

9. Method according to any of claims 1, wherein the classifying step is such that
if a first group of nodes (OZ_40) is classified such that it is permitted to access a second group of nodes (0Z_42), then
said second group of nodes (0Z_61) is classified such that it is permitted to access said first group of nodes (0Z_40).

10. Method according to any of claims 1, wherein the classifying step is such that
if a first group of nodes (OZ_61) is classified such that it is permitted to access a second group of nodes (0Z_60), and the second group of nodes (0Z_60) is classified such that it is permitted to access a third group of nodes (0Z_62), then
said first group of nodes (OZ_61) is permitted to access said third group of nodes (0Z_62).

11. Apparatus for communication between technical devices being nodes (N41,N43) in networks, wherein:
- several groups of said nodes are defined, and
- for each of said groups, a common group label (Z_ID1) is assigned to nodes being a member of said group of nodes (OZ_41 ), and the nodes (N41 ,N43) of said group can share services and resources with all other members of the same group of nodes,
said apparatus including:
- means for defining fora first of said groups of nodes one or more classes of group labels, said classes representing trust levels with respect to said first group (OZ_41);
- means for classifying one or more group labels into a first of said classes (Trustedzone), and,
means for detecting an attempt by a second node (N42,N44) to access services or resources of said first node;
- means for detecting the group label (Z_ID0) of the second node (N42, N44);
- means for permitting said access when the group label (Z_ID0) of the second node (N42,N44) is equal to the group label (Z_ID1) of the first node;
- means for determining if the group label (Z_ID0) of the second node (N42,N44) is classified into said first class (Trustedzone) ;
- means for permitting, when the group label (Z_ID0) of the second node (N42,N44) is different from the group label (Z_ID1) of the first node, said access when the group label (Z_ID0) of the second node (N42,N44) is classified into said first class (Trustedzone), and for rejecting said access when the group label (Z_ID0) of the second node (N42,N44) is not classified into said first class (Trustedzone).

## Patentansprüche

1. Verfahren zur Kommunikation zwischen technischen Geräten, die Knoten (N41, N43) in Netzwerken sind, bei dem mehrere Gruppen der Knoten definiert werden und für jede Gruppe ein gemeinsames Gruppen-Label (Z_ID1) Knoten zugeordnet wird, die ein Mitglied der Knotengruppe (OZ_41) sind und die Knoten (N41, N43) der Gruppe Dienste und Betriebsmittel mit allen Mitgliedern derselben Knotengruppe teilen können, wobei das Verfahren die Schritte einschließt:
- Definieren für eine erste Knotengruppe eine oder mehrere Klassen von Gruppen-Labels, wobei die Klassen Vertrauensstufen in Bezug auf die erste Gruppe (OZ_41) darstellen;
- Klassifizieren eines oder mehrerer Gruppen-Labels in eine erste Klasse (vertrauenswürdige Zone), und
- wenn ein erster Knoten der ersten Gruppe einen Versuch eines zweiten Knotens (N42, N44) feststellt, zu Diensten oder Betriebsmitteln des ersten Knotens Zugriff zu nehmen, Ausführen der folgenden Schritte in dem ersten Knoten:
- Feststellen des Gruppen-Labels (Z_ID0) des zweiten Knotens (N42, N44);
- wenn das Gruppen-Label (Z_ID0) des zweiten Knotens (N42, N44) gleich dem Gruppen-Label (Z_ID1) des ersten Knotens ist, Zulassen des Zugriffs; und
- wenn das Gruppen-Label (Z IDO) des zweiten Knotens (N42, N44) sich von dem Gruppen-Label (Z_ID1) des ersten Knotens unterscheidet:
- Bestimmen, ob das Gruppen-Label (Z_ID0) des zweiten Knotens (N42, N44) in die erste Klasse (vertrauenswürdige Zone) klassifiziert ist;
- wenn das Gruppen-Label (Z_ID0) des zweiten Knotens (N42, N44) in die erste Klasse (vertrauenswürdige Zone) klassifiziert ist, Zulassen des Zugriffs; und
- wenn das Gruppen-Label (Z_ID0) des zweiten Knotens (N42, N44) nicht in die erste Klasse (vertrauenswürdige Zone) klassifiziert ist, Zurückweisen des Zugriffs.

2. Verfahren nach Anspruch 1, bei dem die erste Klasse (vertrauenswürdige Zone) von Gruppen-Labels eine oder mehrere Unterklassen hat, und bei dem verschiedene Arten von Zugriff in Abhängigkeit von der Unterklasse definiert werden, und bei dem auch die Unterklasse des Gruppen-Labels (Z_ID₀) des zweiten Knotens (N42, N44) bestimmt wird.

3. Verfahren nach Anspruch 1 oder 2, bei dem eine Verbindung zwischen zwei Knoten einen Status hat, der definiert, ob beide verbundenen Knoten zur selben Knotengruppe gehören oder nicht.

4. Verfahren nach einem der Ansprüche 1 bis 3, bei dem die Knoten der Knotengruppe (OZ_41) dem selben Benutzer oder der Gruppe von Benutzern zugeordnet oder unter deren Kontrolle sind.

5. Verfahren nach einem der Ansprüche 1 bis 4, bei dem jeder Knoten ein Mitglied von nicht mehr als einer Knotengruppe ist.

6. Verfahren nach einem der Ansprüche 1 bis 5, bei dem die Schritte zum Zulassen eines Zugriffs von einem vom Benutzer unabhängigen Sperrmechanismus beschränkt werden.

7. Verfahren nach einem der Ansprüche 1 bis 6, bei dem der Schritt der Klassifizierung den Schritt des Einschließens von Klassifizierungs-Informationen in eine Datengruppe einschließt, wobei die Datengruppe für die Knoten lesbar ist, die ein Mitglied der Knotengruppe sind oder Zugriffzulassung zu Diensten oder Betriebsmitteln eines ersten Knotens der Knotengruppe haben.

8. Verfahren nach einem der Ansprüche 1 bis 7, bei dem die Schritte zur Zulassung eines Zugriffs so sind, dass der Zugriff auf einen definierten Zeitrahmen beschränkt wird.

9. Verfahren nach einem der Ansprüche 1 bis 8, bei dem der Klassifizierungsschritt so ist, dass wenn eine erste Knotengruppe (OZ_40) so klassifiziert ist, dass der Zugriff auf eine zweite Knotengruppe (OZ_42) zugelassen wird, dann die zweite Knotengruppe (OZ_61) so klassifiziert wird, dass ihr Zugriff auf die erste Knotengruppe (OZ_40) zugelassen wird.

10. Verfahren nach einem der Ansprüche 1 bis 9, bei dem der Klassifizierungsschritt so ist, dass wenn eine erste Knotengruppe (OZ_61) so klassifiziert ist, dass ihr Zugriff auf eine zweite Knotengruppe (OZ_60) zugelassen wird, und die zweite Knotengruppe (OZ_60) so klassifiziert ist, dass ihr Zugriff auf eine dritte Knotengruppe (OZ_62) zugelassen wird, dann ein Zugriff der ersten Knotengruppe (OZ_61) auf die dritte Knotengruppe (OZ_62) zugelassen wird.

11. Vorrichtung zur Kommunikation zwischen technischen Geräten, die Knoten (N41, N43) in Netzwerken sind, wobei
- mehrere Gruppen der Knoten definiert werden und
- für jede Gruppe ein gemeinsames Gruppen-Label (Z_ID1) Knoten zugeordnet wird, die ein Mitglied der Knotengruppe (OZ_41) sind, und die Knoten (N41, N43) der Gruppe Dienste und Betriebsmittel mit allen anderen Mitgliedern derselben Knotengruppe teilen können, wobei die Vorrichtung einschließt:
- Mittel zum Definieren für eine erste Knotengruppe eine oder mehrere Klassen von Gruppen-Labels, wobei die Klassen Vertrauensstufen in Bezug auf die erste Gruppe (OZ_41) darstellen;
- Mittel zum Klassifizieren eines oder mehrerer Gruppen-Labels in eine erste Klasse (vertrauenswürdige Zone) und
- Mittel zur Feststellung eines Versuchs durch einen zweiten Knoten (N42, N44), Zugriff zu Diensten und Betriebsmitteln des ersten Knotens zu nehmen;
- Mittel zur Feststellung des Gruppen-Labels (Z_ID0) des zweiten Knotens (N42, N44);
- Mittel zur Zulassung des Zugriffs, wenn das Gruppen-Label (Z_ID0) des zweiten Knotens (N42, N44) gleich dem Gruppen-Label (Z_ID1) des ersten Knotens ist;
- Mittel zur Bestimmung, ob das Gruppen-Label (Z_ID0) des zweiten Knotens (N42, N44) in die erste Klasse (vertrauenswürdige Zone) klassifiziert ist;
- Mittel zum Zulassen des Zugriffs, wenn das Grupen-Label (Z_ID0) des zweiten Knotens (N42, N44) sich von dem Gruppen-Label (Z_ID1) des ersten Knotens unterscheidet, und wenn das Gruppen-Label (Z_ID0) des zweiten Knotens (N42, N44) in die erste Klasse (vertrauenswürdige Zone) klassifiziert ist, und zum Zurückweisen des Zugriffs, wenn das Gruppen-Label (Z_ID0) des zweiten Knotens (N42, N44) nicht in die erste Klasse (vertrauenswürdige Zone) klassifiziert ist.

## Revendications

1. Un procédé de communication entre des dispositifs techniques désignés par des noeuds (N41, N43) dans les réseaux, où plusieurs groupes desdits noeuds sont définis, et pour chacun desdits groupes, une étiquette commune (Z_ID1) est attribuée aux noeuds appartenant au dit groupe de noeuds (OZ_41), et les noeuds (N41, N43) dudit groupe peuvent partager des services et des ressources avec tous les autres membres du même groupe de noeuds, ledit procédé comprenant les étapes consistant à :
définir pour un premier desdits groupes de noeuds une ou plusieurs classes d'étiquettes communes, lesdites classes représentant des niveaux de confiance par rapport au dit premier groupe (OZ_41);
classer une ou plusieurs étiquettes communes dans une première desdites classes (zone de confiance, « Trustedzone »), et, lorsqu'un premier noeud dudit premier groupe détecte une tentative d'accès aux services ou ressources dudit premier noeud par un deuxième noeud (N42, N44), procéder aux étapes suivantes dans ledit premier noeud;
détecter l'étiquette commune (Z_ID0) du deuxième noeud (N42,N44);
lorsque l'étiquette commune (Z_ID0) du deuxième noeud (N42,N44) est identique à l'étiquette commune (Z_ID1) du premier noeud, autoriser ledit accès ; et
lorsque l'étiquette commune (Z_ID0) du deuxième noeud (N42,N44) est différente de l'étiquette commune (Z_ID1) du premier noeud:
déterminer si l'étiquette commune (Z_ID0) du deuxième noeud (N42,N44) est classée dans ladite première classe (zone de confiance, « Trustedzone »);
lorsque l'étiquette commune (Z_ID0) du deuxième noeud (N42,N44) est classée dans ladite première classe (zone de confiance, « Trustedzone »), autoriser ledit accès, et
lorsque l'étiquette commune (Z_ID0) du deuxième noeud (N42,N44) n'est pas classée dans ladite première classe (zone de confiance, « Trustedzone »), refuser ledit accès.

2. Procédé selon la revendication 1, où la première classe (zone de confiance, « Trustedzone ») d'étiquettes communes comporte au moins une sous-classe, et où les différents types d'accès sont définis en fonction de la sous-classe, et où également la sous-classe de l'étiquette commune (Z_ID0) du deuxième noeud (N42,N44) est déterminée.

3. Procédé selon la revendication 1 ou 2, où une connexion entre deux noeuds a un état, l'état définissant si les deux noeuds connectés appartiennent au même groupe de noeuds ou non.

4. Procédé selon l'une des revendications 1-3, où les noeuds dudit groupe de noeuds (OZ_41) sont affectés au même utilisateur, ou groupe d'utilisateurs, ou sont commandés par le même utilisateur, ou groupe d'utilisateurs.

5. Procédé selon l'une des revendications 1-4, où chaque noeud n'appartient qu'à un seul groupe de noeuds.

6. Procédé selon l'une des revendications 1-5, où *lesdites* étapes d'autorisation d'accès sont limitées par un mécanisme de verrouillage indépendant de l'utilisateur.

7. Procédé selon l'une des revendications 1-6, où ladite étape de classement comprend l'étape consistant à inclure les informations de classement dans un ensemble de données, l'ensemble de données pouvant être lu pour les noeuds en faisant partie ou ayant une autorisation d'accès aux services ou ressources d'un premier noeud dudit groupe de noeuds.

8. Procédé selon l'une des revendications 1-7, où lesdites étapes d'autorisation d'accès sont telles que le dit accès est limité à une durée définie.

9. Procédé selon l'une des revendications 1-8, où l'étape de classement est telle que si un premier groupe de noeuds (OZ_40) est classé de façon à pouvoir accéder à un deuxième groupe de noeuds (OZ_42), alors ledit deuxième groupe de noeuds (OZ_61) est classé de façon à pouvoir accéder au dit premier groupe de noeuds (OZ_40).

10. Procédé selon l'une des revendications 1-9, où l'étape de classement est telle que si un premier groupe de noeuds (OZ_61) est classé de façon à pouvoir accéder à un deuxième groupe de noeuds (OZ_60), et que le deuxième groupe de noeuds (OZ_60) est classé de façon à pouvoir accéder à un troisième groupe de noeuds (OZ_62), alors ledit premier groupe de noeuds (OZ_61) est autorisé à accéder au dit troisième groupe de noeuds (OZ_62).

11. Appareil de communication entre des dispositifs techniques désignés par des noeuds (N41, N43) dans les réseaux, où plusieurs groupes desdits noeuds sont définis, et pour chacun desdits groupes, une étiquette commune (Z_ID1) est attribuée aux noeuds appartenant au dit groupe de noeuds (OZ_41), et les noeuds (N41, N43) dudit groupe peuvent partager des services et des ressources avec tous les autres membres du même groupe de noeuds, ledit appareil comprenant :
un moyen permettant de définir pour un premier desdits groupes de noeuds une ou plusieurs classes d'étiquettes communes, lesdites classes représentant des niveaux de confiance par rapport au dit premier groupe (OZ_41);
un moyen permettant de classer une ou plusieurs étiquettes communes dans une première desdites classes (zone de confiance, « Trustedzone »), et
un moyen permettant de détecter une tentative d'accès aux services ou ressources dudit premier noeud par un deuxième noeud (N42, N44) ;
un moyen permettant de détecter l'étiquette commune (Z_ID0) du deuxième noeud (N42, N44) ;
un moyen permettant d'autoriser ledit accès lorsque l'étiquette commune (Z_ID0) du deuxième noeud (N42, N44) est identique à l'étiquette commune (Z_ID1) du premier noeud ;
un moyen permettant de déterminer si l'étiquette commune (Z_IDO) du deuxième noeud (N42, N44) est classée dans ladite première classe (zone de confiance, « Trustedzone ») ;
un moyen permettant d'autoriser, lorsque l'étiquette commune (Z_ID0) du deuxième noeud (N42, N44) est différente de l'étiquette commune (Z_ID1) du premier noeud, ledit accès lorsque l'étiquette commune (Z_ID0) du deuxième noeud (N42, N44) est classée dans ladite première classe (zone de confiance, « Trustedzone »), et de refuser ledit accès lorsque l'étiquette commune (Z_ID0) du deuxième noeud (N42, N44) n'est pas classée dans ladite première classe (zone de confiance, « Trustedzone »).
